# FASCICULE DE BREVET EUROPEEN

(11) **EP 2 304 391 B1**
(45) Date de publication et mention de la délivrance du brevet: **15.03.2017**
(21) Numéro de dépôt: 09740382.8
(22) Date de dépôt: 24.07.2009
(51) Int. Cl.: G01D 5/30

(54) **DISPOSITIF OPTIQUE ET PROCÉDÉ DE MESURE DE ROTATION D'UN OBJET**
OPTISCHE ANORDNUNG UND VERFAHREN ZUR MESSUNG DER DREHUNG EINES OBJEKTS
OPTICAL DEVICE AND METHOD FOR MEASURING THE ROTATION OF AN OBJECT

(30) Priorité: 24.07.2008 FR 0855066
(43) Date de publication de la demande: 06.04.2011
(73) Titulaire: COMMISSARIAT A L'ENERGIE ATOMIQUE ET AUX ENERGIES ALTERNATIVES, 75015 Paris (FR)
(72) Inventeur: BACH, Olivier, F-33980 Audenge (FR)
(74) Mandataire: Michelet, Alain
(86) Numéro de dépôt international: PCT/FR2009/051496
(87) Numéro de publication internationale: WO 2010/010311

(56) Documents cités:
- EP-A- 1 037 013
- US-A- 4 939 678

## Description

La présente invention concerne un dispositif optique et un procédé de mesure de rotation et/ou de vibrations en rotation d'un objet.

Plus particulièrement, l'invention concerne un dispositif optique et un procédé de mesure de rotations ou vibrations en rotation d'un objet, ces rotations étant de faible amplitude angulaire angulaire au minimum de l'ordre de 0,1 micro-radian) et dont les fréquences de vibration peuvent atteindre plusieurs centaines de Hertz.

En effet, il est important de pouvoir mesurer les rotations et/ou vibrations en rotation de très faible amplitude de certains objets. Par exemple sur une chaîne laser de grande longueur, les vibrations en rotation de composants entrant dans l'alignement optique peuvent produire des vibrations amplifiées des faisceaux et rendre l'alignement très difficile. Afin d'identifier la source des vibrations mécaniques et d'y remédier, il est important de mesurer l'amplitude des vibrations en rotations et au besoin d'en analyser le spectre en fréquence.

Différentes catégories de dispositifs permettent d'obtenir de manière plus ou moins directe une mesure de rotation et/ou vibration en rotation d'un objet.

Une première catégorie de dispositifs utilise plusieurs accéléromètres qui fournissent des mesures de translation, dont sont déduites une mesure indirecte en rotation. Une première méthode se base sur l'ajustement numérique des paramètres d'un modèle mécanique pour obtenir une simulation optimisée des vibrations en translation comparées aux mesures. Le modèle mécanique ainsi déterminé est ensuite utilisé pour calculer une estimation des rotations. Bien que les modèles mécaniques soient souvent simplifiés par rapport à la réalité, les ajustements numériques nécessitent des temps de calcul relativement longs et coûteux. Une seconde méthode utilise la mesure de vibrations en translation de plusieurs accéléromètres dont les relevés sont synchronisés. La mesure différentielle des déplacements divisée par la distance entre capteurs permet de déduire les vibrations angulaires en fonction du temps. Cependant la précision de la mesure est liée à l'espace entre les capteurs. Cet espace minimum requis est difficile à mettre en oeuvre pour des objets de petite taille. De plus, les capteurs peuvent être malencontreusement placés à des positions insensibles à certains modes propres de vibrations de l'objet les noeuds de vibration).

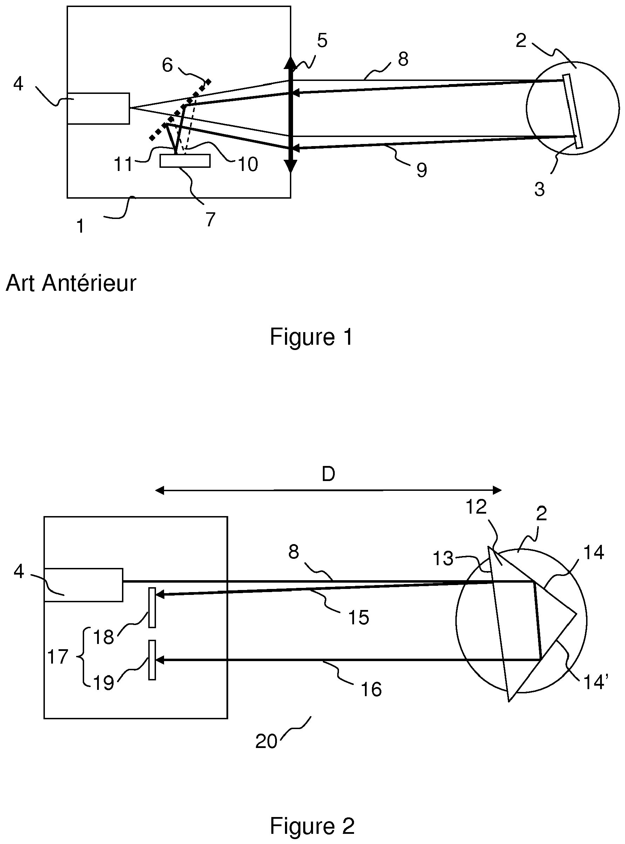

Une seconde catégorie de dispositif de mesure de rotation repose sur l'utilisation d'une méthode optique d'autocollimation illustrée en Figure 1. Une lunette auto-collimatrice 1 comprend une source 4 et un détecteur de position 7. Le faisceau collimaté 8 de la source est dirigé sous incidence normale sur une face plane réfléchissante 3 de l'objet 2 ou sur un miroir plan solidaire de l'objet à mesurer.
De manière connue, lorsque la face réfléchissante 3 subit une rotation d'un angle θ, le faisceau réfléchi 9 subit une déviation angulaire 2θ. Un détecteur de position 7 placé au foyer de la lunette permet de mesurer la déviation du faisceau réfléchi projeté sur le détecteur 11 induite par une rotation de l'objet relativement à une position intiale faisceau réfléchi projeté 10. Connaissant la distance de la lunette à l'objet, la mesure du déplacement du faisceau réfléchi permet de calculer directement l'angle de rotation correspondant de l'objet. La précision de la mesure est fonction de la distance entre l'objet et la lunette auto-collimatrice.

Toutefois, la mesure de rotation obtenue par une lunette auto-collimatrice n'est pas une mesure absolue des rotations de l'objet, mais uniquement une mesure relative des rotations entre l'objet et la lunette. En effet, il n'est pas possible de différencier les mouvements de la lunette de ceux de l'objet. Assurer la stabilité de la lunette est donc un enjeu majeur, qu'il est difficile voire impossible à réaliser pour la mesure d'objets stables dont les mouvements sont de faible amplitude ou lorsqu'il est impossible d'isoler la lunette des vibrations ambiantes).

La présente invention a pour but de remédier à ces inconvénients et concerne plus particulièrement un dispositif et un procédé de mesure de rotation et/ou des vibrations en rotation d'un objet.

La présente invention concerne donc un dispositif optique de mesure de rotation d'un objet tel que défini dans les revendications. Le dispositif optique de mesure de rotation d'un objet comprenant une source lumineuse apte à émettre un faisceau lumineux incident collimaté se propageant selon une direction incidente et un dioptre plan réfléchissant destiné à être rendu solidaire de l'objet dont on cherche à mesurer la rotation et apte à former un premier faisceau réfléchi. Selon l'invention, le dispositif comprend un coin de cube rétro-réflecteur destiné à être rendu solidaire de l'objet, ledit coin de cube comprenant des faces planes réfléchissantes aptes former un second faiceau réfléchi dans une direction parallèle à la direction incidente, un système de détection apte à mesurer d'une part le déplacement Δ₁ du premier faisceau réfléchi par le dioptre plan réfléchissant et d'autre part le déplacement Δ₂ du second faisceau réfléchi par les faces réfléchissantes du coin de cube, les déplacements Δ₁ et Δ₂ étant mesurés respectivement par rapport à une position initiale du premier faisceau réfléchi et du second faisceau réfléchi et un système de traitement apte à calculer en fonction d'une part de la mesure du déplacement Δ₁ et de la distance D₁ entre le système de détection et le dioptre plan réfléchissant et d'autre part de la mesure du déplacement Δ₂ et de la distance D₂ entre le système de détection et le coin de cube, une mesure de rotation α de l'objet entre une position initiale et une position de mesure.

recevoir une partie du faisceau incident et à former un second faiceau réfléchi dans une direction parallèle à la direction incidente, le système de détection étant adapté à mesurer d'une part le déplacement Δ₁ du premier faisceau réfléchi par le dioptre plan réfléchissant et d'autre part le déplacement Δ₂ du second faisceau réfléchi par les faces réfléchissantes du coin de cube, les déplacements Δ₁ et Δ₂ étant mesurés respectivement par rapport à une position initiale du premier faisceau réfléchi et du second faisceau réfléchi. Selon l'invention, le dispositif comprend un système de traitement adapté à calculer en fonction d'une part de la mesure du déplacement Δ₁ et de la distance D₁ entre le système de détection et le dioptre plan réfléchissant et d'autre part de la mesure du déplacement Δ₂ et de la distance D₂ entre le système de détection et le coin de cube, une mesure de rotation α de l'objet entre une position initiale et une position de mesure, ladite mesure de rotation α de l'objet étant insensible aux rotations de la source lumineuse.

Selon un premier mode de réalisation de l'invention, le coin de cube est un demi-cube avantageusement plein comprenant trois faces planes réfléchissantes et dont la quatrième face constitue le dioptre plan réfléchissant.

Selon un autre mode de réalisation, le dispositif de mesure de rotation comporte un dioptre plan réfléchissant et un séparateur de faisceau apte à séparer angulairement le faisceau incident d'une part en un faisceau collimaté dirigé vers le dioptre plan et d'autre part en un faisceau collimaté dirigé vers le coin de cube.

Selon un mode de réalisation particulier, le système de détection comprend un premier détecteur de position apte à mesurer le déplacement Δ₁ du premier faisceau réfléchi et un second détecteur de position apte à mesurer le déplacement Δ₂ du second faisceau réfléchi entre une position initiale et une position de mesure.

Selon un mode de réalisation particulier, le système de détection comprend une matrice CCD/CMOS apte à mesurer le déplacement Δ₁ du premier faisceau réfléchi et le déplacement Δ₂ du second faisceau réfléchi entre une position initiale et une position de mesure.

Selon un mode de réalisation particulier, le système de détection est apte à mesurer respectivement le déplacement Δ₁ du premier faisceau réfléchi et le déplacement Δ₂ du second faisceau réfléchi selon deux directions (X,Y) transverses pour en déduire les mesures de rotation de l'objet selon respectivement deux axes de rotation.

Selon un mode de réalisation particulier, le système de traitement est apte à détecter l'amplitude et les fréquences de résonances dans le spectre de vibrations en rotation de l'objet à partir de la densité spectrale mesurée.

L'invention concerne également un procédé de mesure optique de rotation d'un objet tel que défini dans les revendications.

Ce procédé comprend les étapes suivantes :
- rendre un coin de cube solidaire de l'objet, le coin de cube ayant des faces planes réfléchissantes,
- rendre un dioptre plan réfléchissant solidaire de l'objet,
- diriger un faisceau lumineux incident collimaté d'une part vers le dioptre plan réfléchissant de manière à former un premier faisceau réfléchi et d'autre part vers le coin de cube de manière à former un second faisceau réfléchi dans une direction parallèle à la direction incidente,
- détecter la position initiale du point d'impact du premier faisceau réfléchi par le dioptre plan sur un détecteur,
- détecter la position du point d'impact du second faisceau réfléchi par les faces planes réfléchissantes sur un détecteur,
- mesurer les déplacements respectifs Δ₁ et Δ₂ des faisceaux réfléchis et entre une position initiale et une position de mesure,
- calculer une fonction arithmétique de Δ₁ et Δ₂,
- déduire une mesure de rotation de l'objet portant le coin de cube.

L'invention concerne également un procédé de mesure optique des vibrations en rotation d'un objet comprenant les étapes suivantes :
- mesurer les déplacements repectifs Δ₁ et Δ₂ des faisceaux réfléchis et selon le procédé de mesure de rotation à une série d'instants de mesure *tᵢ*, et
- appliquer une opération de transformée de Fourier à ces séries de mesures temporelles [Δ₁(*tᵢ*) ; Δ₂(*tᵢ*)] pour obtenir un spectre des vibrations en rotation de l'objet en fonction de la fréquence.

L'invention trouvera une application particulièrement avantageuse dans la mesure de l'amplitude de rotation, de l'amplitude des vibrations en rotation, et de la densité en fréquences de vibrations en rotation de supports de composants optiques dans une chaîne laser de grande longueur.
- calculer une fonction arithmétique de Δ₁ et Δ₂, en fonction d'une part de la mesure du déplacement Δ₁ et de la distance D1 entre le système de détection et le dioptre plan réfléchissant et d'autre part de la mesure du déplacement Δ₂ et de la distance D2 entre le système de détection et le coin de cube,
- déduire une mesure de rotation de l'objet portant le coin de cube entre une position initiale et une position de mesure, ladite mesure de rotation de l'objet étant insensible aux rotations du faisceau lumineux incident.

L'invention concerne également un procédé de mesure optique des vibrations en rotation d'un objet comprenant les étapes suivantes :
- mesurer les déplacements repectifs Δ₁ et Δ₂ des faisceaux réfléchis et selon le procédé de mesure de rotation à une série d'instants de mesure *tᵢ*, et
- appliquer une opération de transformée de Fourier à ces séries de mesures temporelles [Δ₁(*tᵢ*) ; Δ₂(*tᵢ*)] pour obtenir un spectre des vibrations en rotation de l'objet en fonction de la fréquence.

L'invention trouvera une application particulièrement avantageuse dans la mesure de l'amplitude de rotation, de l'amplitude des vibrations en rotation, et de la densité en fréquences de vibrations en rotation de supports de composants optiques dans une chaîne laser de grande longueur.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :
- la figure 1 représente le schéma de principe d'utilisation d'une lunette auto-collimatrice ;
- la figure 2 représente un premier mode de réalisation d'un dispositif de mesure de rotation selon l'invention ;
- la figure 3 représente un dispositif de mesure de rotation en position initale (Fig 3A), dans le cas d'une rotation de l'objet (3B) et dans le cas d'une rotation de l'ensemble source-détecteur (3C) ;
- la figure 4 représente un dispositif de mesure de rotation en position initale Fig (4A), dans le cas d'une translation de l'objet (4B) et dans le cas d'une translation de l'ensemble source-détecteur (4C) ;
- la figure 5 représente des spectres de vibration en rotation obtenus par un procédé de l'invention ;
- la figure 6 représente un second mode de réalisation d'un dispositif de mesure de rotation selon l'invention.

Un premier mode de réalisation d'un dispositif selon l'invention est représenté figure 2. Le dispositif 20 comprend d'une part un bloc émetteur-récepteur lumineux et d'autre part un coin de cube rétro-réflecteur 12. Le bloc émetteur-récepteur comprend une source lumineuse 4 et un système détection 17. Ce bloc peut également comprendre un système optique de collimation, et une lame semi-réfléchissante. La source 4 émet un faisceau incident collimaté 8 se propageant selon une direction incidente. Le coin de cube 12 est rendu solidaire de l'objet dont on cherche à mesurer la rotation et/ou les vibrations en rotation. Le coin de cube comprend un dioptre plan 13 et des faces réfléchissantes 14, 14', 14". Le coin de cube est généralement un tétraèdre, dont trois faces 14, 14', 14" sont perpendiculaires. Le faisceau incident 8 sur le dioptre plan 13 du coin de cube est partiellement réfléchi et partiellement transmis à l'intérieur du coin de cube. Le faisceau partiellement réfléchi sur le dioptre 13 forme un premier faisceau réfléchi 15. Le faisceau transmis à l'intérieur du coin de cube est réfléchi par les faces réfléchissantes 14, 14', 14" et ressort du coin de cube à travers le dioptre d'entrée-sortie sous la forme d'un faisceau réfléchi 16 se propageant suivant une direction parallèle à la direction du faisceau incident, selon une propriété connue du coin de cube. Le système de détection 17 comprend un premier détecteur 18 qui mesure le déplacement Δ₁ (amplitude et signe) du premier faisceau réfléchi et un second détecteur 19 qui mesure le déplacement Δ₂ du second faisceau réfléchi à un instant *t*. Les signes des déplacements Δ₁ et Δ₂ sont définis par convention au départ. Un système de traitement (non représenté) collecte les mesures de Δ₁ et Δ₂ et en fait un traitement mathématique fonction de Δ₁, Δ₂, de la somme (Δ₁ + Δ₂) et/ou de la différence (Δ₁ - Δ₂), et de la distance D entre le coin de cube 12 et le système de détection 17.

Le coin de cube est un tétraèdre. Si le coin de cube est en verre, l'intensité du 1^{er} faisceau réfléchi est de l'ordre de 4% de l'intensité du faisceau 8, et l'intensité du 2^{nd} faisceau réfléchi est de l'ordre de 92%. Le rapport signal sur bruit de la mesure de Δ₁ est dans ces conditions bien inférieur à celui de la mesure de Δ₂. Le dioptre d'entrée-sortie 13 peut comporter un traitement semi-réfléchissant pour améliorer la dynamique en équilibrant l'intensité des deux faisceaux réfléchis.

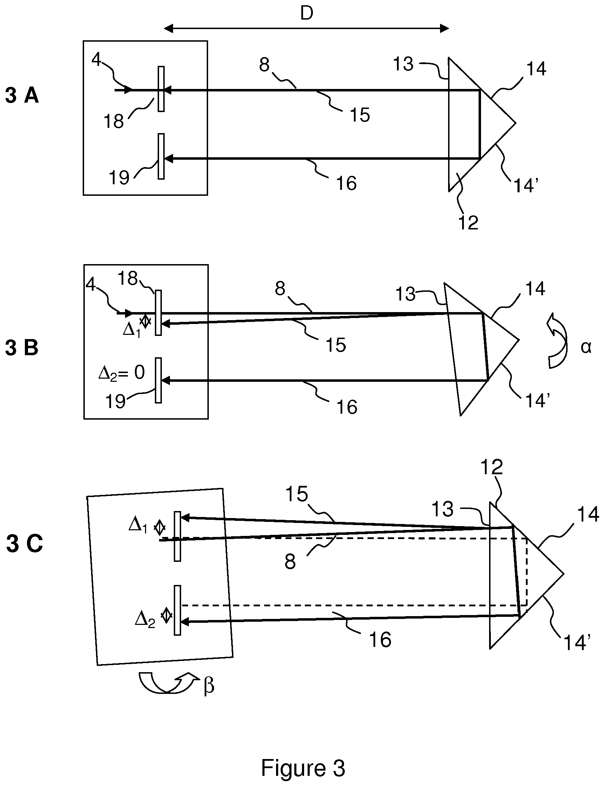

Le principe de fonctionnement de l'invention sera décrit en lien avec la figure 3. La figure 3A représente le dispositif en position d'auto-collimation, considérée pour l'explication comme une position initale de référence. Le faisceau incident collimaté 8 atteint le dioptre plan 13 sous incidence normale : le premier faisceau réfléchi 15 se superpose au faisceau incident, se propageant en sens inverse et le second faisceau 16 est réfléchi parallèlement. La figure 3B représente l'effet d'une rotation α du coin de cube 12 : le 2^{nd} faisceau réfléchi 16 ne produit pas de déviation angulaire (propriété du coin de cube), tandis que le 1^{er} faisceau réfléchi 15 subit une déviation angulaire de 2.α. Les angles de rotation α étant très faibles, la distance D entre le système de détection 17 et le coin de cube 13 est quasiment invariante au 1^{er} ordre et le déplacement du faisceau 15 sur le détecteur peut être approché par une formule du type Δ₁ = 2. α.D, tandis que Δ₂ = 0.

La figure 3C représente l'effet d'une rotation β du bloc source 4-détecteurs 17, sans rotation du coin de cube 12. Une rotation d'un angle β du bloc source implique une déviation du faisceau incident 8 d'un angle β et une déviation angulaire du 1^{er} faisceau réfléchi 15 de -2. β. Sur le détecteur 17 le 1^{er} faisceau est déplacé de Δ₁ =-2. β.D. Le 2^{nd} faisceau réfléchi 16 est réfléchi parallèlement au faisceau incident 8 et symétrique par rapport à l'image du sommet du coin de cube vue à travers la face avant. Le 2^{nd} faisceau réfléchi 16 subit un déplacement sur le détecteur 18 d'une quantité Δ₂ = -2. β.D.

Selon le mode de réalisation préféré de l'invention, la somme arithmétique de Δ₁ et Δ₂, rapportée à la distance D, permet de mesurer les rotations de l'objet 2 et d'éliminer les rotations parasites du bloc source-détecteurs.

Le dispositif de l'invention est ainsi sensible à de très faibles rotations de l'objet portant le coin de cube tout en étant insensible aux rotations du bloc d'éclairage et de mesure.

Selon le mode de réalisation préféré, les détecteurs 18 et 19 sont deux détecteurs de position. Chacun des détecteurs mesure l'écart en position de chaque faisceau 15, 16 respectivement par rapport à une position d'origine sur le détecteur. Des détecteurs de position (Position Sensitive Detectors) délivrent une tension proportionnelle à l'écart en position. Ces détecteurs peuvent être sensibles à la déviation du faisceau selon une ou préférentiellement selon deux directions X, Y dans un plan transverses à l'axe du faisceau. Le signe du déplacement de chaque faisceau est calibré au départ. La technologie des détecteurs est préférentiellement des détecteurs de position car ils ont des temps de réponse rapide (fréquence acquisition 500-1000Hz pour des fréquences de vibration recherchées de l'ordre de la centaine de Hertz). Un détecteur CCD unique peut également être utilisé pour mesurer le déplacement des deux faisceaux réfléchis. Toutefois la réponse d'une CCD est plus limitée en fréquence.

Un système de traitement des données collecte les valeurs de Δ₁ et Δ₂ et effectue la somme de ces déviations à un instant *t* de manière à éliminer le terme correspondant au bougé de la source.

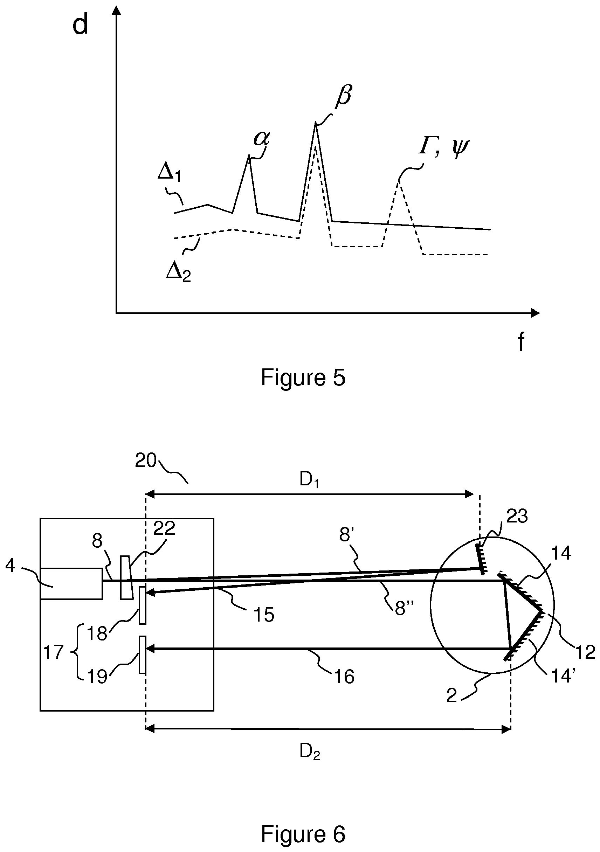

Une série de mesures est généralement effectuée en fonction du temps à la fréquence d'acquisition des détecteurs 18, 19. On obtient ainsi une série de points Δᵢ = (Δ₁ + Δ₂) ᵢ₌₁, ..., _{N} à des instants *tᵢ*. La transformée de Fourier de ces séries de mesures temporelles Δ₁(*tᵢ*), Δ₂(*tᵢ*), (Δ₁+Δ₂)(*tᵢ*) permet d'obtenir un spectre en fréquence des vibrations en rotation du coin de cube. La figure 5 représente des courbes de densités spectrales typiques ainsi obtenues pour Δ₁, Δ₂ et (Δ₁+Δ₂). Ces courbes présentent des pics de vibrations correspondant à des fréquences de résonance. La courbe correspondant à Δ₁ présente un premier pic correspondant à des vibrations en rotation de l'objet et un second pic correspondant à des vibrations en rotation de la lunette. La courbe correspondant à Δ₂ est insensible aux rotations de l'objet, mais présente un pic correspondant à des vibrations en rotation de la lunette et un autre pic correspondant à une translation du système de détectionet/ou de l'objet. La différence entre les densités spectrales de Δ₁ et de Δ₂ présente un premier pic correspondant aux vibrations en rotation de l'objet et un autre pic correspondant à des vibrations en translation. Les courbes de la figure 5 permettent ainsi d'identifier des fréquences de résonance et leur amplitude relative.

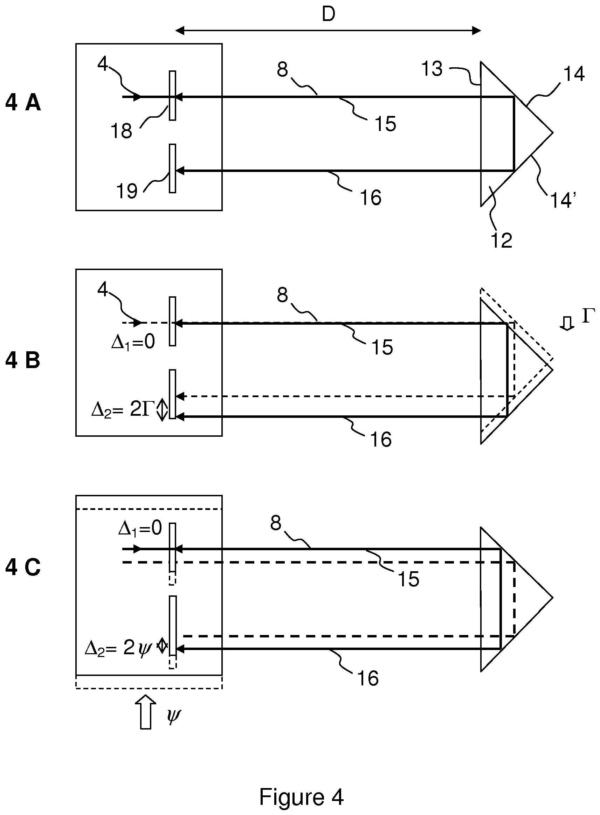

Un inconvénient du premier mode de réalisation de l'invention décrit ci-dessus est sa sensibilité aux translations parasites du coin de cube et/ou du bloc source-détection. La figure 4 illustre des exemples de translations et leurs effets sur les mesures. La figure 4A représente le dispositif de l'invention en position d'auto-collimation. La figure 4B représente l'effet d'une translation Γ du coin de cube 12 : le 1^{er} faisceau réfléchi 15 ne subit pas de déviation angulaire, tandis que le 2^{nd} faisceau réfléchi 16 subit un décalage de 2. Γ. Le déplacement du faisceau 16 sur le détecteur est Δ₂ = 2. Γ, tandis que Δ₁ = 0.

La figure 4C représente l'effet d'une translation ψ du bloc source-détection, sans translation du coin de cube 13. Une translation d'amplitude ψ de la source 4 implique une translation du point d'impact du faisceau incident 8 sur le coin de cube. Le détecteur 17 étant solidaire de la source 4, le détecteur ne mesure aucune déplacement apparent Δ₁ = 0. Le 2^{nd} faisceau réfléchi 16 est réfléchi parallèlement au faisceau incident 8 et avec un déplacement sur le détecteur 18 d'une quantité Δ₂ = 2. ψ.

Ni l'addition ni la soustraction de Δ₁ et Δ₂ ne permettent d'éliminer l'effet de ces translations ou de vibrations en translation sur les mesures. Les fréquences de résonance des modes de vibration en rotation et en translation sont toutefois différentes (cf Fig 5) et peuvent ainsi être identifiées.

Afin de limiter l'importance relative des vibrations en translation par rapport aux vibrations en rotations dans le signal mesuré, il est souhaitable d'augmenter la sensibilité de la mesure en rotation en augmentant la distance D entre le bloc source-détection et le coin de cube, de manière à amplifier les déviations angulaires.

Selon une variante de l'invention, le dispositif de mesure de rotation de l'invention peut être combiné à un ou plusieurs accéléromètres mesurant les translations du coin de cube et du bloc source-détection.

La figure 6 représente un second mode de réalisation d'un dispositif de mesure de rotation conforme à l'invention. Ce mode de réalisation utilise également une source 4 émettant un faisceau lumineux collimaté 8 se propageant dans une direction incidente et un coin de cube 12 réfléchissant une partie du faisceau lumineux dans une direction parallèle à la direction incidente. Le système de détection est similaire à celui décrit en lien avec le premier mode de réalisation de l'invention (Fig 2). Toutefois, le second mode de réalisation n'utilise pas la réfléxion sur un dioptre plan d'entrée-sortie du coin de cube. Le dispositif comporte en outre un dioptre plan réfléchissant 23 solidaire de l'objet à mesurer et placé à proximité du coin de cube. Le dispositif comprend un séparateur de faisceau apte à séparer angulairement le faisceau incident 8 en deux faisceaux collimatés : d'une part en un faisceau collimaté 8" se propageant selon la direction incidente et d'autre part en un faisceau collimaté 8' se propageant selon une direction formant un angle avec la direction incidente. Le séparateur de faisceau peut par exemple être une lame prismatique. Le faisceau 8' est dirigé vers le dioptre plan 23 et réfléchi pour former un faisceau réfléchi 15. Le faisceau 8" est dirigé vers le coin de cube et réfléchi par les faces réfléchissantes du coinde cube 12 pour former un faisceau 16 se propageant dans une direction parallèle à la direction incidente. La mesure du déplacement Δ₁ du faisceau 15 sur le détecteur 18 et respectivement du déplacement Δ₂ du faisceau 16 sur le détecteur 18 permet de manière analogue au premier mode de réalisation, de mesurer les rotations de l'objet portant le coin de cube 12 et le dioptre plan réfléchissant 23.

Ce second mode de réalisation permet de dissocier les réglages initiaux des deux faisceaux réfléchis. Ce mode de réalisation permet aussi d'utiliser un coin de cube creux constitué de trois miroirs plans.

Les deux modes de réalisation de l'invention décrits peuvent utiliser un coin de cube tétraèdrique à l'intérieur duquel le faisceau incident subit générallement trois réflexions dans un espace à trois dimensions avant de ressortir du coin de cube dans une direction parallèle à la direction incidente. Un prisme peut également permettre la rétro-réflexion d'un faisceau collimaté, par réflexion interne sur deux faces du prisme, le faisceau réfléchi étant parallèle au faisceau incident et dans le même plan. L'homme du métier pourra transposer l'invention en remplaçant le coin de cube par un prisme. Le dispositif de mesure de rotation ainsi obtenu ne permet toutefois qu'une mesure de rotation suivant un axe de rotation perpendiculaire au plan contenant le faisceau incident et réfléchi.

L'invention utilise un dispositif et un procédé de mesure qui permet de s'affranchir, au premier ordre, des rotations parasites de la lunette. Le dispositif de l'invention utilise une méthode optique et donc sans contact avec l'objet. Le dispositif requiert uniquement l'installation d'un coin de cube solidaire des mouvements de l'objet à mesurer. Le coin de cube peut par exemple être fixé sur le support de l'objet. Les dimensions du coin de cube peuvent être extrêmement réduites (quelques mm de côté). Le dispositif utilise des composants peu coûteux et de réalisation facile. Le dispositif ne nécessite pas d'alignement précis.

Le dispositif permet d'obtenir des mesures précises de rotation d'un objet. Le dispositif muni d'un système de détection à deux dimensions, permet de mesurer les rotations d'un objet suivant deux axes de rotation transverses à l'axe du faisceau de la source. Le dispositif de l'invention permet des mesures temporelles qui peuvent être analysées pour fournir une mesure des vibrations en rotation en fonction de la fréquence.

## Revendications

1. Dispositif optique de mesure de rotation (20) d'un objet (2) comprenant :
- une source lumineuse (4) apte à émettre un faisceau lumineux incident collimaté (8) se propageant selon une direction incidente,
- un dioptre plan réfléchissant (13, 23) destiné à être rendu solidaire de l'objet (2) dont on cherche à mesurer la rotation et apte à recevoir une partie du faisceau incident (8, 8') et à former un premier faisceau réfléchi (15),
- un coin de cube rétro-réflecteur (12) destiné à être rendu solidaire de l'objet (2), ledit coin de cube (12) comprenant des faces planes réfléchissantes (14, 14', 14") aptes à recevoir une partie du faisceau incident (8, 8") et à former un second faisceau réfléchi (16) dans une direction parallèle à la direction incidente,
- un système de détection (17) adapté à mesurer d'une part le déplacement Δ₁ du premier faisceau réfléchi (15) par le dioptre plan réfléchissant (13, 23) et d'autre part le déplacement Δ₂ du second faisceau réfléchi (16) par les faces réfléchissantes (14, 14', 14") du coin de cube (12), les déplacements Δ₁ et Δ₂ étant mesurés respectivement par rapport à une position initiale du premier faisceau réfléchi (15) et du second faisceau réfléchi (16), et **caractérisé en ce qu'**il comprend :
- un système de traitement adapté à calculer en fonction d'une part de la mesure du déplacement Δ₁ et de la distance D₁ entre le système de détection (17) et le dioptre plan réfléchissant (13, 23) et d'autre part de la mesure du déplacement Δ₂ et de la distance D₂ entre le système de détection (17) et le coin de cube (12), une mesure de rotation α de l'objet (2) entre une position initiale et une position de mesure, ladite mesure de rotation α de l'objet (2) étant fonction d'une somme arithmétique de la mesure du déplacement Δ₁ et de la mesure du déplacement Δ₂, ladite somme arithmétique étant rapportée à la distance D₂ entre le coin de cube (12) et le système de détection (17), de manière à ce que la mesure de rotation α de l'objet (2) soit corrigée d'une rotation parasite β de la source (4) par rapport à l'objet (2) et insensible aux rotations de la source lumineuse (4).

2. Dispositif (20) de mesure de rotation d'un objet selon la revendication 1, **caractérisé en ce que** le coin de cube (12) est un demi-cube comprenant trois faces planes réfléchissantes (14, 14', 14") et dont la quatrième face constitue le dioptre plan réfléchissant (13).

3. Dispositif (20) de mesure de rotation d'un objet selon la revendication 1 ou 2, **caractérisé en ce qu'**il comporte un dioptre plan réfléchissant (23) et un séparateur de faisceau (22) apte à séparer angulairement le faisceau incident (8) d'une part en un faisceau collimaté (8') dirigé vers le dioptre plan (23) et d'autre part en un faisceau collimaté (8") dirigé vers le coin de cube (12).

4. Dispositif (20) de mesure de rotation d'un objet selon l'une des revendications 1 à 3, **caractérisé en ce que** le système de détection (17) comprend un premier détecteur de position (18) apte à mesurer le déplacement Δ₁ du premier faisceau réfléchi (15) et un second détecteur de position (19) apte à mesurer le déplacement Δ₂ du second faisceau réfléchi (16) entre une position initiale et une position de mesure.

5. Dispositif (20) de mesure de rotation d'un objet selon l'une des revendications 1 à 3, **caractérisé en ce que** le système de détection (17) comprend une matrice CCD/CMOS apte à mesurer le déplacement Δ₁ du premier faisceau réfléchi (15) et le déplacement Δ₂ du second faisceau réfléchi (16) entre une position initiale et une position de mesure.

6. Dispositif de mesure de rotation (20) d'un objet (2), selon l'une quelconque des revendications 1 à 5, **caractérisé en ce que** le système de détection (17) est apte à mesurer respectivement le déplacement Δ₁ du premier faisceau réfléchi (15) et le déplacement Δ₂ du second faisceau réfléchi (16) selon deux directions (X,Y) transverses pour en déduire les mesures de rotation de l'objet (2) selon respectivement deux axes de rotation.

7. Dispositif de mesure de rotation (20) d'un objet (2) selon l'une quelconque des revendications 1 à 6, **caractérisé en ce qu'**il comprend :
- un accéléromètre destiné à être rendu solidaire de l'objet (2) et
- un système de traitement des données apte à calculer à partir des mesures fournies par le dit accéléromètre et de la mesure des déplacements Δ₁ et Δ₂ des faisceaux réfléchis respectivement par le dioptre plan (13, 23) et par le coin de cube (12) une mesure de rotation de l'objet (2) corrigée de la translation.

8. Dispositif de mesure des vibrations en rotation d'un objet comprenant un dispositif selon l'une des revendications 1 à 7, **caractérisé en ce que** le système de détection est apte à collecter d'une part une série de mesures du déplacement Δ₁ du faisceau réfléchi (15) à une suite d'instants tᵢ, _{i=1,...,N} et d'autre part une série de mesures du déplacement Δ₂ du faisceau réfléchi (16) à une suite d'instants tᵢ, et **en ce que** le système de traitement est apte à appliquer à ces séries de mesures temporelles Δ₁(tᵢ) et Δ₂(tᵢ) une opération de transformée de Fourier pour obtenir une mesure de la densité spectrale des vibrations en rotation de l'objet (2) fonction de la fréquence de ces vibrations.

9. Dispositif de mesure selon la revendication 8, **caractérisé en ce que** le système de traitement est apte à détecter l'amplitude et les fréquences de résonances dans le spectre de vibrations en rotation de l'objet à partir de la densité spectrale mesurée.

10. Procédé de mesure optique de rotation d'un objet (2) comprenant les étapes suivantes :
- rendre un coin de cube (12) solidaire de l'objet (2), le coin de cube ayant des faces planes réfléchissantes (14, 14', 14"),
- rendre un dioptre plan réfléchissant (13, 23) solidaire de l'objet (2),
- diriger un faisceau lumineux incident collimaté (8) d'une part vers le dioptre plan réfléchissant (13, 23) de manière à former un premier faisceau réfléchi (15) et d'autre part vers le coin de cube (12) de manière à former un second faisceau réfléchi (16) dans une direction parallèle à la direction incidente,
- détecter la position initiale du point d'impact du premier faisceau réfléchi (15) par le dioptre plan (13, 23) sur un détecteur (18),
- détecter la position du point d'impact du second faisceau réfléchi (16) par les faces planes réfléchissantes (14, 14', 14") sur un détecteur (19),
- mesurer les déplacements respectifs Δ₁ et Δ₂ des faisceaux réfléchis (15) et (16) entre une position initiale et une position de mesure,
**caractérisé en ce qu'**il comprend en outre les étapes suivantes :
- calculer une somme arithmétique de Δ₁ et Δ₂, rapportée à la distance D₂ entre le coin de cube (12) et le système de détection (17),
- déduire une mesure de rotation de l'objet (2) portant le coin de cube, ladite mesure de rotation de l'objet (2) étant insensible aux rotations du faisceau lumineux incident (8).

11. Procédé de mesure optique des vibrations en rotation d'un objet comprenant les étapes suivantes :
- mesurer les déplacements repectifs Δ₁ et Δ₂ des faisceaux réfléchis (15) et (16) selon le procédé de la revendication 10 à une série d'instants de mesure *tᵢ*, et
- appliquer une opération de transformée de Fourier à ces séries de mesures temporelles [Δ₁(*tᵢ*); Δ₂(*tᵢ*)] pour obtenir un spectre des vibrations en rotation de l'objet en fonction de la fréquence.

## Patentansprüche

1. Optische Anordnung (20) zur Messung der Drehung eines Objekts (2), die
- eine Lichtquelle (4), die geeignet ist, einen kollimierten, sich in einer Einfallsrichtung ausbreitenden einfallenden Lichtstrahl (8) auszusenden,
- eine ebene reflektierende Grenzfläche (13, 23), die dazu bestimmt ist, mit dem Objekt (2), dessen Drehung gemessen werden soll, vereint zu werden, und geeignet ist, einen Teil des einfallenden Strahls (8, 8') aufzufangen und einen ersten reflektierten Strahl (15) zu bilden,
- eine Ecke (12) eines Retroreflektor-Würfels, die dazu bestimmt ist, mit dem Objekt (2) vereint zu werden, wobei die Würfelecke (12) ebene reflektierende Flächen (14, 14', 14") aufweist, die geeignet sind, einen Teil des einfallenden Strahls (8, 8') aufzufangen und einen zweiten reflektierten Strahl (16) in einer zur Einfallsrichtung parallelen Richtung zu bilden,
- ein Erfassungssystem (17), das geeignet ist, einerseits den Versatz Δ₁ des ersten reflektierten Strahls (15) durch die ebene reflektierende Grenzfläche (13, 23) und andererseits den Versatz Δ₂ des zweiten reflektierten Strahls (16) durch die reflektierenden Flächen (14, 14', 14") der Würfelecke (12) zu messen, wobei die Versätze Δ₁ und Δ₂ jeweils in Bezug auf eine Ausgangsposition des ersten reflektierten Strahls (15) und des zweiten reflektierten Strahls (16) gemessen werden,
aufweist,
**dadurch gekennzeichnet, daß** sie
- ein Verarbeitungssystem aufweist, das dazu ausgelegt ist, in Abhängigkeit vom Maß des Versatzes Δ₁ und der Entfernung D₁ zwischen dem Erfassungssystem (17) und der ebenen reflektierenden Grenzfläche (13, 12) einerseits und vom Maß des Versatzes Δ₂ und der Entfernung D₂ zwischen dem Erfassungssystem (17) und der Würfelecke (12) andererseits ein Maß α für die Drehung des Objekts (2) zwischen der Ausgangsposition und einer Meßposition zu berechnen, wobei das Maß α für die Drehung des Objekts (2) von einer arithmetischen Summe aus dem Versatz Δ₁ und dem Versatz Δ₂ abhängt, wobei die arithmetische Summe auf die Entfernung D₂ zwischen der Würfelecke (12) und dem Erfassungssystem (17) bezogen wird, so daß das Maß α für die Drehung des Objekts (2) um eine parasitäre Drehung β der Quelle (4) gegenüber dem Objekt (2) korrigiert wird und für die Drehungen der Lichtquelle (4) unempfindlich wird.

2. Anordnung (20) zur Messung der Drehung eines Objekts gemäß Anspruch 1, **dadurch gekennzeichnet, daß** die Würfelecke (12) ein halber Würfel mit drei ebenen reflektierenden Flächen (14, 14', 14") ist, dessen vierte Fläche die reflektierende ebene Grenzfläche bildet.

3. Anordnung (20) zur Messung der Drehung eines Objekts gemäß Anspruch 1 oder 2, **dadurch gekennzeichnet, daß** sie eine reflektierende ebene Grenzfläche (23) und einen Strahlteiler (22), der geeignet ist, den einfallenden Strahl (8) winkelmäßig in einen kollimierten, auf die ebene Grenzfläche (23) gerichteten Strahl einerseits und einen kollimierten, auf die Würfelecke (12) gerichteten Strahl andererseits zu teilen, aufweist.

4. Anordnung (20) zur Messung der Drehung eines Objekts gemäß einem der Ansprüche 1 bis 3, **dadurch gekennzeichnet, daß** das Erfassungssystem (17) einen ersten Positionssensor (18), der geeignet ist, den Versatz Δ₁ des ersten reflektierten Strahls (15) zwischen einer Ausgangsposition und einer Meßposition zu messen, und einen zweiten Positionssensor (19), der geeignet ist, den Versatz Δ₂ des zweiten reflektierten Strahls (16) zwischen einer Ausgangsposition und einer Meßposition zu messen, aufweist.

5. Anordnung (20) zur Messung der Drehung eines Objekts gemäß einem der Ansprüche 1 bis 3, **dadurch gekennzeichnet, daß** das Erfassungssystem (17) eine CCD/CMOS-Matrix aufweist, die geeignet ist, den Versatz Δ₁ des ersten reflektierten Strahls (15) und den Versatz Δ₂ des zweiten reflektierten Strahls (16) zwischen einer Ausgangsposition und einer Meßposition zu messen.

6. Anordnung (20) zur Messung der Drehung eines Objekts (2) gemäß einem der Ansprüche 1 bis 5, **dadurch gekennzeichnet, daß** das Erfassungssystem (17) geeignet ist, den Versatz Δ₁ des ersten reflektierten Strahls (15) bzw. den Versatz Δ₂ des zweiten reflektierten Strahls (16) in zwei Querrichtungen (X, Y) zu messen, um daraus die Maße für die Drehung des Objekts (2) um zwei jeweilige Drehachsen abzuleiten.

7. Optische Anordnung (20) zur Messung der Drehung eines Objekts (2) gemäß einem der Ansprüche 1 bis 6, **dadurch gekennzeichnet, daß** sie
- einen Beschleunigungsmesser, der dazu bestimmt ist, mit dem Objekt (2) vereint zu werden, und
- ein Datenverarbeitungssystem, das geeignet ist, aus den vom Beschleunigungsmesser gelieferten Messungen und dem Maß der Versätze Δ₁ und Δ₂ der von der ebenen Grenzfläche (13, 23) bzw. der Würfelecke (12) reflektierten Strahlen ein Maß für die Drehung des Objekts (2) zu errechnen,
aufweist.

8. Anordnung zur Messung der Vibrationen bei einer Drehung eines Objekts, die eine Anordnung gemäß einem der Ansprüche 1 bis 7 aufweist, **dadurch gekennzeichnet, daß** das Erfassungssystem geeignet ist, einerseits eine Reihe von Messungen des Versatzes Δ₁ des reflektierten Strahls (15) zu einer Reihe von Zeitpunkten tᵢ mit i = 1, ..., N und andererseits eine Reihe von Messungen des Versatzes Δ₂ des reflektierten Strahls (16) zu einer Reihe von Zeitpunkten tᵢ zu sammeln, und daß das Verarbeitungssystem geeignet ist, auf diese Reihen von zeitabhängigen Messungen Δ₁ (tᵢ) und Δ₂ (tᵢ) eine Fourier-Transformation anzuwenden, um ein Maß für die spektrale Dichte der Vibrationen bei einer Drehung des Objekts (2) in Abhängigkeit von der Frequenz dieser Vibrationen zu erhalten.

9. Meßanordnung gemäß Anspruch 8, **dadurch gekennzeichnet, daß** das Verarbeitungssystem geeignet ist, von der gemessenen spektralen Dichte ausgehend, die Amplitude und die Resonanzfrequenzen im Spektrum der Vibrationen bei einer Drehung des Objekts zu erkennen.

10. Verfahren zur optischen Messung der Drehung eines Objekts (2), das die folgenden Schritte aufweist:
- eine Würfelecke (12) mit dem Objekt (2) vereinen, wobei die Würfelecke ebene reflektierende Flächen (14, 14', 14") aufweist,
- eine ebene reflektierende Grenzfläche (13, 23) mit dem Objekt (2) vereinen,
- einen einfallenden kollimierten Lichtstrahl (8) in einer zur Einfallsrichtung parallelen Richtung einerseits auf die ebene reflektierende Grenzfläche (13, 23) richten, um einen ersten reflektierten Strahl (15) zu bilden, und andererseits auf die Würfelecke (12) richten, um einen zweiten reflektierten Strahl (16) zu bilden,
- die Ausgangsposition des Punktes erfassen, an dem der von der ebenen Grenzfläche (13, 23) reflektierte erste Strahl (15) auf einem Detektor (18) auftrifft,
- die Ausgangsposition des Punktes erfassen, an dem der von den ebenen reflektierenden Flächen (14, 14', 14") reflektierte zweite Strahl (16) auf einem Detektor (19) auftrifft,
- die jeweiligen Versätze Δ₁ und Δ₂ der reflektierten Strahlen (15) und (16) zwischen einer Ausgangsposition und einer Meßposition messen, **dadurch gekennzeichnet, daß** es außerdem die folgenden Schritte aufweist:
- Berechnen einer auf die Entfernung D₂ zwischen der Würfelecke (12) und dem Erfassungssystem (17) bezogenen arithmetischen Summe aus Δ₁ und Δ₂,
- Ableiten eines Maßes für die Drehung des die Würfelecke tragenden Objekts (2), wobei die Messung der Drehung des Objekts (2) für die Drehungen des einfallenden Lichtstrahls (8) unempfindlich ist.

11. Verfahren zur Messung der Vibrationen bei einer Drehung eines Objekts, das die folgenden Schritte aufweist:
- Messen der jeweiligen Versätze Δ₁ und Δ₂ der reflektierten Strahlen (15) und (16) gemäß dem Verfahren nach Anspruch 10 zu einer Reihe von Zeitpunkten tᵢ und
- Anwenden einer Fourier-Transformation auf die Reihe von zeitabhängigen Messungen [Δ₁ (tᵢ) ; Δ₂ (tᵢ)], um ein Spektrum der Vibrationen bei einer Drehung des Objekts (2) in Abhängigkeit von der Frequenz zu erhalten.

## Claims

1. An optical device (20) for measuring the rotation of an object (2), comprising:
- a light source (4) capable of emitting a collimated incident light beam (8) propagating in an incident direction,
- a reflecting plane optical interface (13, 23) intended to be fastened to the object (2), the rotation of which it is desired to measure, and capable of receiving a part of the incident beam (8, 8') and of forming a first reflected beam (15),
- a cube-corner retroreflector (12) intended to be fastened to the object (2), said cube corner (12) comprising reflecting plane faces (14, 14', 14") capable of receiving a part of the incident beam (8, 8") and of forming a second reflected beam (16) in a direction parallel to the incident direction,
- a sensing system (17) capable of measuring, on the one hand, the displacement Δ₁ of the first reflected beam (15), reflected by the reflecting plane optical interface (13, 23) and, on the other hand, the displacement Δ₂ of the second reflected beam (16), reflected by the reflecting faces (14, 14', 14") of the cube corner (12), the displacements Δ₁ and Δ₂ being respectively measured with respect to an initial position of the first reflected beam (15) and of the second reflected beam (16), and **characterized in that** it comprises:
- a processing system adapted for calculating, as a function, on the one hand, of the measurement of the displacement Δ₁ and of the distance D₁ between the sensing system (17) and the reflecting plane optical interface (13, 23) and, on the other hand, of the measurement of the displacement Δ₂ and of the distance D₂ between the sensing system (17) and the cube corner (12), a measurement of the rotation α of the object (2) between an initial position and a measurement position, said measurement of the rotation α of the object (2) being function of an arithmetic sum of the measurement of the displacement Δ₁ and of the measurement of the displacement Δ₂, said arithmetic sum being divided by the distance D₂ between the cube corner (12) and the sensing system (17), so that said measurement of the rotation α of the object (2) is corrected from a parasitic rotation β of the source relatively to the object (2) and insensitive to the rotations of the light source (4).

2. A device (20) for measuring the rotation of an object according to claim 1, **characterized in that** the cube corner (12) is a half-cube comprising three reflecting plane faces (14, 14', 14") and the fourth face of which constitutes the reflecting plane optical interface (13).

3. A device (20) for measuring the rotation of an object according to claim 1 or 2, **characterized in that** it comprises a reflecting plane optical interface (23) and a beam splitter (22) capable of angularly separating the incident beam (8), on the one hand, into a collimated beam (8') directed toward the plane optical interface (23) and, on the other hand, into a collimated beam (8") directed toward the cube corner (12).

4. A device (20) for measuring the rotation of an object according to one of claims 1 to 3, **characterized in that** the sensing system (17) comprises a first position sensor (18) capable of measuring the displacement Δ₁ of the first reflected beam (15) and a second position sensor (19) capable of measuring the displacement Δ₂ of the second reflected beam (16) between an initial position and a measurement position.

5. A device (20) for measuring the rotation of an object according to one of claims 1 to 3, **characterized in that** the sensing system (17) comprises a CCD/CMOS matrix capable of measuring the displacement Δ₁ of the first reflected beam (15) and the displacement Δ₂ of the second reflected beam (16) between an initial position and a measurement position.

6. A device (20) for measuring the rotation of an object (2), according to any one of claims 1 to 5, **characterized in that** the sensing system (17) is capable of measuring respectively the displacement Δ₁ of the first reflected beam (15) and the displacement Δ₂ of the second reflected beam (16) in two transverse directions (X, Y), to deduce therefrom the measurements of rotation of the object (2) according to two axes of rotation, respectively.

7. A device (20) for measuring the rotation of an object (2), according to any one of claims 1 to 6, **characterized in that** it comprises:
- an accelerometer intended to be fastened to the object (2) and
- a data processing system capable of calculating from the measurements provided by said accelerometer and the measurement of the displacements Δ₁ and Δ₂ of the beams reflected by the plane optical interface (13, 23) and the cube corner (12), respectively, a measurement of rotation of the object (2) corrected by the translation.

8. A device for measuring rotational vibrations of an object, comprising a device according to one of claims 1 to 7, **characterized in that** the sensing system is capable of collecting, on the one hand, a series of measurements of the displacement Δ₁ of the reflected beam (15) at a series of instants *tᵢ*, _{*i* = 1,.., N} and, on the other hand, a series of measurements of the displacement Δ₂ of the reflected beam (16) at a series of instants *tᵢ*, and **in that** the processing system is capable of applying a Fourier transform operation to these series of temporal measurements Δ₁(t) and Δ₂(t), to obtain a measurement of the spectral density of the rotational vibrations of the object (2) as a function of the frequency of these vibrations.

9. A measuring device according to claim 8, **characterized in that** the processing system is capable of sensing the amplitude and resonance frequencies in the rotational vibration spectrum of the object from the spectral density measured.

10. A method for optically measuring the rotation of an object (2), comprising the following steps:
- fastening a cube corner (12) to the object (2), the cube corner comprising reflecting plane faces (14, 14', 14"),
- fastening a reflecting plane optical interface (13, 23) to the object (2),
- directing a collimated incident light beam (8), on the one hand, to the reflecting plane optical interface (13, 23) to form a first reflected beam (15) and, on the other hand, to the cube corner (12) to form a second reflected beam (16) in a direction parallel to the incident direction,
- detecting the initial position of the point of impact of the first reflected beam (15), reflected by the plane optical interface (13, 23), on a sensor (18),
- detecting the position of the point of impact of the second reflected beam (16), reflected by the reflective plane faces (14, 14', 14"), on a sensor (19),
- measuring the respective displacements Δ₁ and Δ₂ of the reflected beams (15) and (16) between an initial position and a measurement position,
**characterized in that** it further comprises the following steps:
- calculating an arithmetic sum of Δ₁ and Δ₂, divided by the distance D₂ between the cube corner (12) and the sensing system (17),
- deducing a measurement of rotation of the object (2) carrying the cube corner, said measurement of rotation of the object (2) being insensitive to rotations of the incident light beam (8).

11. A method for optically measuring rotational vibrations of an object (2), comprising the following steps:
- measuring the respective displacements Δ₁ and Δ₂ of the reflected beams (15) and (16) according to the method of claim 10, at a series of measurement instants *tᵢ*, and
- applying a Fourier transform operation to these series of temporal measurements [Δ₁(*tᵢ*); Δ₂(*tᵢ*)] to obtain a spectrum of the rotational vibrations of the object as a function of the frequency.
